**Europäisches Patentamt**

**European Patent Office**

**Office européen des brevets**

(11) Veröffentlichungsnummer: **0 253 089 B1**

(12) **EUROPÄISCHE PATENTSCHRIFT**

(45) Veröffentlichungstag der Patentschrift: **11.09.91**

(51) Int. Cl.⁵: **G06K 19/08**, B42D 15/02

(21) Anmeldenummer: **87106933.2**

(22) Anmeldetag: **13.05.87**

(54) **Mehrschichtiges Dokument.**

(30) Priorität: **10.07.86 CH 2776/86**

(43) Veröffentlichungstag der Anmeldung:
**20.01.88 Patentblatt 88/03**

(45) Bekanntmachung des Hinweises auf die
Patenterteilung:
**11.09.91 Patentblatt 91/37**

(84) Benannte Vertragsstaaten:
**CH DE ES FR GB IT LI**

(56) Entgegenhaltungen:
**EP-A- 0 145 474**
**CH-A- 588 358**
**DE-A- 2 815 708**
**FR-A- 1 549 724**
**US-A- 4 057 919**

(73) Patentinhaber: **Landis & Gyr Betriebs AG**

**CH-6301 Zug(CH)**

(72) Erfinder: **Blazso, Eva**
**Untere Rainstrasse 26**
**CH-6340 Baar(CH)**

(74) Vertreter: **Müller, Hans-Jürgen, Dipl.-Ing. et al**
**Müller, Schupfner & Gauger Maximilianstras-**
**se 6 Postfach 10 11 61**
**W-8000 München 1(DE)**

**Beschreibung**

Die Erfindung bezieht sich auf ein mehrschichtiges Dokument, wie es als Zahlungsmittel, Identitätsausweis, Etikett und dergleichen Verwnedung findet, der im Oberbegriff des Anspruchs 1 angegebenen Art.

Dokumente dieser Art sind einiger Zeit bekannt, z.B. aus CH-PS 588 358. Ihre Sicherheit beruht auf einer optische wirksamen Zwischenschicht, die zwischen zwei Schutzschichten eingebettet ist. Sie kann nur mit erheblichem technischem Aufwand reproduziert werden oder müsste zur Abformung unbeschädigt freigelegt werden. Die Fälschungssicherheit hängt daher von der Haftfestigkeit der einzelnen Schichten untereinander ab. Die Haftfestigkeit erreicht die Werte der Zerreisskraft der Schutzschichmaterialien, falls für die beiden Schutzschichten gleichartige Materialien Verwendung finden. Bei einem Freilegungsversuch durch Abschälen der Deckschicht werden die gespeicherten Informationen zerstört, weil sich die Trägerschicht mechanisch verformt.

Ferner ist eine Ausweiskarte aus der DE-A-2 815 708 bekannt, bei der ein bedruckter Informationsträger in kleine Segmente zerlegt ist; dabei sorgt eine anschließende vollständige oder auch nur teilweise Beschichtung des Informationsträgers mit Kunststoff für die mechanische Stabilität der Ausweiskarte.

Der Erfindung liegt die Aufgabe zugrunde, ein Dokument der eingangs genannten Art zu schaffen, dessen Schichten durch Kleben oder Schweißen so verbunden sind, daß zwischen den Schichten eingeschlossene Informationen beim Freilegen sicher zerstört werden.

Die Lösung dieser Aufgabe gelingt durch die im Kennzeichen des Anspruchs 1 angegebenen Merkmale.

Nachfolgend werden Ausführungsbeispiel der Erfindung anhand der Zeichnung näher beschrieben.

Es zeigen:

Figur 1a    den prinzipiellen Aufbau eines Dokumentes im Schnitt,

Figur 1b    ein Muster einer Unterteilung einer optisch aktiven Zwischenschicht,

Figur 2     eine Anordnung einer Gruppe von Teilen der Zwischenschicht in Form eines optischen Merkmals und

Figur 3     ein Schnittbild des Dokumentes in verschiedenen Herstellungsstadien.

Die Figur 1a zeigt einen Schnitt durch ein Dokument. Eine Deckschicht 1 und eine ein- oder mehrschichtig aufgebaute Trägerschicht 2 schliessen optische Markierungen 3 in Form von reliefartigen oder von ebenen, mikroskopischen Strukturen mit einem Raster von mindestens 200 Linien/mm ein. Sie enthalten Informationen, die visuell oder mit geeigneten Geräten erkannt werden, und sind mit mindestens einer optische aktiven, d.h. einer reflektiven oder einer im Brechungsindex von der Deckschicht 1 und der Trägerschicht 2 verschiedenen Zwischenschicht 4 bedeckt. Die Schichten 1, 2 und 4 sind miteinander verklebt oder verschweisst. Dieser dem Stand der Technik entsprechende Aufbau des Dokumentes weist den Nachteil auf, dass die Haftung der Schichten 1, 2 wegen der Zwischenschicht 4 stark vermindert ist, d.h. eine Trennung der Schichten 1,2 ohne Beschädigung der optischen Markierungen 3 ist nicht auszuschliessen.

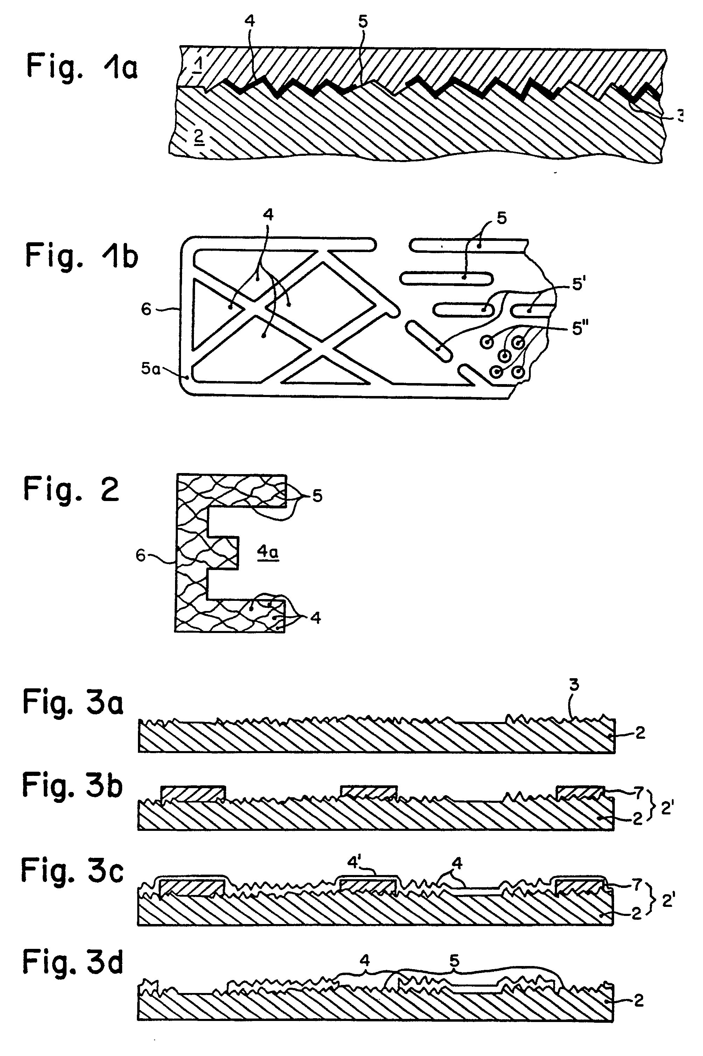

Werden die optischen Markierungen 3 nur teilweise der Zwischenschicht 4 bedeckt, so entstehen zwischenschichtfreie Flächen, im folgenden Haftbrücken 5 genannt, in denen die Deck- und Trägerschicht 1,2 ohne störende Zwischenschicht 4 unmittelbar miteinander verbunden sind. Wegen der fehlenden Zwischenschicht 4 tragen die Bereiche der optischen Markierungen 3 in den Haftbrücken 5 beim Lesen der Strukturen nichts zur Information bei. Die Haftung der Schichten 1,2 bewirk beim Versuch des Ablösens eine mechanische Zerstörung der mit Zwischenschicht 4 bedeckten optischen Markierungen 3 in der Nachbarschaft der Haftbrücken 5, da das Material der Schutzschichten 1, 2 überdehnt wird. Die Haftbrücken 5 bilden ein von den in den optischen Markierungen 3 enthaltenen Informationen und von der Lage der optischen Markierungen 3 unabhängiges Muster. Ein Raster des Musters von 0,1 Linien/mm und eine Anordnung der Haftbrücken 5 in der gleichen Ebene wie die Zwischenschichten 4 verhindern ein Freilegen der optischen Markierungen 3 ohne deren Verletzung mit andern Mitteln als einfachem Aufspalten der verdundenen Schichten 1, 2. Die Anordnung der Haftbrücken in der gleichen Ebene wie die Zwischenschichten 4 ermöglicht die Herstellung eines sehr dünnen und beigsamen Dokumentes. Diese Haftbrücken 5 bilden bei Verwendung einer im visuellen Bereich transparenten Deckschicht 1 ein von aussen mit dem unbewaffneten Auge sichtbares Muster (siehe Figur 1b). Diese Muster kann ein künstlerisch gestaltetes Sicherheitsmerkmal darstellen. Anstelle eines Linienrasters kann auch ein Raster mit unterbrochenen Linien 5' oder mit Punkten 5'' verwendet werden. Eine Haftbrückenlinie 5a bildet eine äussere Berandung 6 des Musters der Haftbrücken 5, 5' und 5''.

Die Berandung 6 kann zur Ausgestaltung einer zusätzlichen Information gemäss der Figur 2 herangezogen werden. Ausserhalb der Berandung 6 kann ein Feld 4a mit oder ohne durch Haftbrücken 5 unterteilte Zwischenschicht 4 mit optischen Markierungen 3 angeordnet sein. Die Berandung 6 kann ein Zeichen, z.B. ein Piktogramm, einen Namenszug (oder Teile davon) darstellen, ein Zeichen umfassen, oder Begrenzungslinien des Zeichens einfassen. Die begrenzende Haftbrückenlinie 5a kann aus künstlerischen Erwägungen auch unterbrochen sein. Die Grösse des Zeichens ist der künstlerischen Gestaltung überlassen; es kann die ganze Fläche des Dokumentes bedecken oder nur eine Fläche von 0,2 mm² in Anspruch nehmen. Neben dem künstlerisch gestalteten Sicherheitsmerkmal und der durch die Berandung 6 geformten zusätzlichen Informationen werden auf dem Dokument auch die optischen Markierungen 3 bzw. die durch deren optischen Eigenschaften bestimmten optischen Effekte sichtbar. Diese Effekte sind abhängig von der Qualität der Lichtquelle, dem Lichteinfallswinkel und dem Betrachtungswinkel und können optisch nicht vervielfältigt werden.

Die Deckschicht 1 kann auch nur ausserhalb des visuellen Bereichs des Lichtwellenspektrums transparent sein, damit die Informationen dem unbewaffneten Auge verborgen bleiben; hingegen können sie mit geeigneten Geräten ausgelesen werden. Zwischen diesen beiden Extremen in der Ausgestaltung des Dokumentes 1 können auch Kombinationen von vorbestimmten Spektralbereichen des Lichtes zur Anwendung gelangen in Abhängigkeit der Transparenz der Deckschicht 1 und des Aufbaus der optisch aktiven Zwischenschicht 4. Für das Auslesen der Informationen in Transmission muss die Transparenz der Trägerschicht 2 zusätzlich den oben beschriebenen Anforderungen genügen.

Zur Herstellung des beschriebenen Dokumentes werden zunächst die optischen Markierungen 3, die Zwischenschicht 4 und das Muster der Haftbrücken 5 in mehreren Arbeitsgängen auf die Trägerschicht 2 gebracht:

- Die Trägerschicht 2 wird mit den optischen Markierungen 3 geprägt und anschliessend die Zwischenschicht 4 aufgebracht, oder auf die Trägerschicht 2 werden die optischen Markierungen 3 mit oder ohne Zwischenschicht 4 aufgeklebt. Bei der letzteren Methode muss die Zwischenschicht 4 separat aufgebracht werden.
- Um die für die Haftbrücken 4 nötigen zwischenschichtfreien Flächen zu erhalten,
  - kann die Zwischenschicht 4 in einem vorbestimmten Muster mit mechanischen oder chemischen Mitteln teilweise wieder entfernt werden,
  - kann die Zwischenschicht 4 durch eine das Muster erzeugende Maske oder ein Sieb aufgetragen werden,
  - können die optischen Markierungen 3 in kleinen Stücken so mit der Trägerschicht 2 verbunden werden, dass das gewünschte Muster der Haftbrücken 5 entsteht,

- oder kann das Muster der Haftbrücken 5 zunächst mit einer abwaschbaren Schicht 7 auf die mit optischen Markierungen 3 versehene Trägerschicht 2 aufgebracht werden (Figur 3a und 3b), damit wie Figur 3c zeigt, die Zwischenschicht 4 auf der ganzen Fläche der so vorbereiteten Trägerschicht 2' aufgetragen und danach mit einem Waschprozess die abwaschbare Schicht 7 und die in der Fig. 3 mit 4' bezeichneten Teilen der Zwischenschicht 4 entfernt werden können. Für das Aufbringen der abwaschbaren Schicht 7 mit herkömmlichen Druckverfahren werden mit Vorteil wasserlösliche Polymere verwendet, wie z.B. Polyvinylpyrrolidon, Polyacrylamid, Polyäthylenglykol, wasserlösliche Cellulosearten wie Hydroxypropylcellulose.

In einem zweiten Schritt wird die gemäss der Figur 3d vorbereitete Trägerschicht 2 mit der Deckschicht 1 verklebt oder verschweisst, wobei die Haftung bei Verwendung gleicher oder gleichartiger Materialien für die Schichten 1,2 im Bereich der Haftbrücken besonders hoch ist.

## Patentansprüche

1. Mehrschichtiges Dokument mit mindestens einer optisch wirksamen Zwischenschicht (4), die optische Markierungen (3) in Form von mikroskopischen Strukturen auf einer Trägerschicht (2) bedeckt und zwischen zwei, einerseits als Deckschicht (1) und andererseits als obengenannte Trägerschicht (2) dienenden Schutzschichten eingeschlossen ist,
dadurch gekennzeichnet,
dass als Haftbrücken (5; 5'; 5") wirkende zwischenschichtfreie Flächen vorhanden sind, dass die Haftbrücken (5; 5'; 5") ein vorbestimmtes Muster bilden, das von den in den optischen Markierungen (3) enthaltenen Informationen und von der Lage der optischen Markierungen (3) unabhängig ist, dass in den Haftbrücken (5; 5'; 5") die Deckschicht (1) und die Trägerschicht (2) ohne störende Zwischenschicht (4) unmittelbar miteinander durch Verkleben oder durch Verschweissen verbunden sind und dass die Haftung zwischen den Schutzschichten (1; 2) derart gross ist, dass ein Versuch des Ablösens einer der Schutzschichten (1; 2) eine mechanische Zerstörung der mit der Zwischenschicht (4) bedeckten optischen Markierungen (3) in der Nachbarschaft der Haftbrücken (5; 5'; 5") bewirkt.

2. Dokument nach Anspruch 1, dadurch gekennzeichnet, dass die mikroskopischen Strukturen der optischen Markierungen (3) reliefartig sind und einen Raster von wenigstens 200 Linien/mm aufweisen.

3. Dokument nach Anspruch 1 oder 2,
**dadurch gekennzeichnet,**
daß das Muster der Haftbrücken (5, 5', 5") einen Raster zwischen 0,1 Linien pro mm und 10 Linien pro mm aufweist.

4. Dokument nach einem der Ansprüche 1 bis 3,
**dadurch gekennzeichnet,**
daß das Muster der Haftbrücken (5, 5', 5") durch die Deckschicht (1) dem unbewaffneten Auge sichtbar ist.

5. Dokument nach einem der Ansprüche 1 bis 3,
**dadurch gekennzeichnet,**
daß das Muster der Haftbrücken (5, 5', 5") durch die im visuellen Bereich des Lichtes nicht transparente Deckschicht (1) nur mit optischen Hilfsmitteln erkennbar ist.

6. Dokument nach einem der vorhergehenden Ansprüche,
**dadurch gekennzeichnet,**
daß die Zwischenschichten (4) und die Flächen der Haftbrücken (5, 5', 5") beiden Schutzschichten (1, 2) in einer gemeinsamen Ebene liegen.

7. Dokument nach einem der vorangegehenden Ansprüche,
**dadurch gekennzeichnet,**
daß das Muster der Haftbrücken (5, 5', 5") künstlerisch gestaltete Sicherheitsmerkmale des Dokumentes darstellt.

8. Dokument nach einem der vorangehenden Ansprüche,
**dadurch gekennzeichnet,**
daß die durch das Muster der Haftbrücken (5, 5', 5") getrennten Felder der Zwischenschicht (4) als Gruppen in Form eines Zeichens von wenigstens 0,2 mm² Fläche begrenzt sind.

9. Dokument nach Anspruch 8,
**dadurch gekennzeichnet,**
daß das Zeichen ein Bild, ein Piktogramm, einen Namenszug, ein Schriftzeichen oder Teile davon darstellt, und daß ein oder mehrere Zeichen auf dem Dokument enthalten sind.

10. Verfahren zur Herstellung eines Dokumentes nach einem der vorstehenden Ansprüche,
**dadurch gekennzeichnet,**
daß das Muster durch teilweises Abtragen der Zwischenschicht (4) erzeugt wird.

11. Verfahren zur Herstellung eines Dokumentes nach einem der Ansprüche 1 bis 9,
**dadurch gekennzeichnet,**
daß die Zwischenschicht (4) durch eine das Muster erzeugende Maske oder ein Sieb auf die Trägerschicht (2) aufgebracht wird.

12. Verfahren zur Herstellung eines Dokumentes nach einem der Ansprüche 1 bis 9,
**dadurch gekennzeichnet,**
daß Teile mit den optischen Markierungen (3) und der Zwischenschicht (4) einzeln auf der Trägerschicht (2) im vorbestimmten Muster angeordnet werden.

13. Verfahren nach Anspruch 10,
**dadurch gekennzeichnet,**
daß vor dem Aufbringen der Zwischenschicht (4) die Trägerschicht (2) zunächst an den für die Haftbrücken (5, 5', 5") vorgesehenen Flächenteilen mit einer abwaschbaren Schicht (7) bedeckt werden, daß die Zwischenschicht (4) auf die ganze Fläche der Trägerschicht (2) aufgetragen wird und daß anschließend nur auf diesen Flächenteilen die Zwischenschicht (4') und die Schicht (7) durch einen Waschprozess entfernt werden.

14. Verfahren nach Anspruch 12,
**dadurch gekennzeichnet,**
daß das Muster durch mechanische Mittel erzeugt wird.

15. Verfahren nach Anspruch 10,
**dadurch gekennzeichnet,**
daß das Muster durch chemische Mittel erzeugt wird.

16. Verfahren nach Anspruch 13,
**dadurch gekennzeichnet,**
daß als abwaschbare Schicht (7) ein wasserlösliches Polymer verwendet wird.

**Claims**

1. A multi-layer document comprising at least one optically effective intermediate layer (4) which covers optical markings (3) in the form of microscopic structures on a backing layer (2) and which is enclosed between two protective layers serving on the one hand as a cover layer (1) and on the other hand as the above-mentioned backing layer (2), characterised in that there are provided intermediate layer-free areas which act as adhesion bridges (5; 5'; 5"), that the adhesion bridges (5; 5'; 5") form a predetermined pattern which is independent of the items of information contained in the optical markings (3) and of the position of the optical markings (3), that in the adhesion bridges (5; 5'; 5") the cover layer (1) and the backing layer (2) are directly connected together by adhesive or by welding without the interference of the intermediate layer (4) and that the adhesion between the protective layers (1; 2) is so great that an attempt at detaching one of the protective layers (1; 2) causes mechanical destruction of the optical markings (3) covered with the intermediate layer (4) in the vicinity of the adhesion bridges (5; 5'; 5").

2. A document according to claim 1 characterised in that the microscopic structures of the optical markings (3) are relief-like and have a definition of at least 200 lines/mm.

3. A document according to claim 1 or claim 2 characterised in that the pattern of the adhesion bridges (5, 5', 5") has a definition of between 0.1 lines per mm and 10 lines per mm.

4. A document according to one of claims 1 to 3 characterised in that the pattern of the adhesion bridges (5, 5', 5") is visible to the naked eye through the cover layer (1).

5. A document according to one of claims 1 to 3 characterised in that the pattern of the adhesion bridges (5, 5', 5") can only be detected by optical aids through the cover layer (1) which is not transparent in the visual range of light.

6. A document according to one of the preceding claims characterised in that the intermediate layers (4) and the surfaces of the adhesion bridges (5, 5', 5") of both protective layers (1, 2) lie in a common plane.

7. A document according to one of the preceding claims characterised in that the pattern of the adhesion bridges (5, 5', 5") represents security features of the document, of an artistic configuration.

8. A document according to one of the preceding claims characterised in that the areas of the intermediate layer (4) which are separated by the pattern of the adhesion bridges (5, 5', 5") are defined as groups in the form of a symbol of at least an area of 0.2 mm².

9. A document according to claim 8 characterised in that the symbol represents a picture, a pictogram, a signature, a character or parts thereof and that one or more symbols are contained on the document.

10. A process for the production of a dent according to one of the preceding claims characterised in that the pattern is produced by partial removal of the intermediate layer (4).

11. A process for the production of a document according to one of claims 1 to 9 characterised in that the intermediate layer (4) is applied to the backing layer (2) through a screen or a mask for producing the pattern.

12. A process for the production of a document according to one of claims 1 to 9 characterised in that parts with the optical markings (3) and the intermediate layer (4) are individually arranged on the backing layer (2) in the predetermined pattern.

13. A process according to claim 10 characterised in that prior to the application of the intermediate layer (4) the backing layer (2) is firstly covered with a layer (7) which can be washed off, at the surface portions intended for the adhesion bridges (5, 5', 5"), that the intermediate layer (4) is applied to the entire surface of the backing layer (2) and that then the intermediate layer (4') and the layer (7) are removed by a washing process only on said surface portions.

14. A process according to claim 12 characterised in that the pattern is produced by mechanical means.

15. A process according to claim 10 characterised in that the pattern is produced by chemical means.

16. A process according to claim 13 characterised in that a water-soluble polymer is used as the layer (7) which can be washed off.

## Revendications

1. Document à plusieurs couches, avec au moins une couche intermédiaire optiquement active (4), qui recouvre des marquages optiques (3) présents sous forme de structures microscopiques sur une couche de support (2), et qui est incluse entre deux couches de protection constituant d'une part une couche de recouvrement (1) et d'autre part la couche de support précitée (2),
caractérisé en ce que des surfaces dépourvues de couche intermédiaire sont présentes, qui servent de ponts d'adhésion (5;5';5"), en ce que les ponts d'adhésion (5;5;5") forment un dessin prédéterminé qui est indépendant des informations contenues dans les marquages optiques (3) et de la position des marquages optiques (3), en ce que, dans les ponts d'adhésion (5;5';5"), la couche de recouvrement (1) et la couche de support (2) sont directement assemblées l'une à l'autre par collage ou par soudage, sans couche intermédiaire gênante (4), et en ce que l'adhésion entre les couches de protection (1;2) est telle qu'une tentative de détachement d'une des couches de protection (1;2) produit une destruction mécanique des marquages optiques (3) recouverts par la couche intermédiaire (4) au voisinage des ponts d'adhésion (5;5';5").

2. Document selon la revendication 1, caractérisé en ce que les structures microscopiques des marquages optiques (3) sont en relief et présentent une trame d'au moins 200 lignes/mm.

3. Document selon la revendication 1 ou 2, caractérisé en ce que le dessin des ponts d'adhésion (5,5',5") présente une trame d'entre 0,1 ligne par mm et 10 lignes par mm.

4. Document selon l'une des revendications 1 à 3, caractérisé en ce que le dessin des ponts d'adhésion (5,5',5") est visible à l'oeil nu à travers la couche de recouvrement (1).

5. Document selon l'une des revendications 1 à 3, caractérisé en ce que le dessin des ponts d'adhésion (5,5',5") ne peut être distingué à travers la couche de recouvrement (1), qui n'est pas transparente dans la plage visible de la lumière, qu'à l'aide d'accessoires optiques.

6. Document selon l'une des revendications précédentes, caractérisé en ce que les couches intermédiaires (4) et les surfaces des ponts d'adhésion (5,5',5") des deux couches de protection (1,2) se situent dans un même plan.

7. Document selon l'une des revendications précédentes, caractérisé en ce que le dessin des ponts d'adhésion (5,5',5") représente des caractères distinctifs de sécurité du document, artistiquement configurés.

8. Document selon l'une des revendications précédentes, caractérisé en ce que les champs de la couche intermédiaire (4) qui sont séparés par le dessin des ponts d'adhésion (5,5',5"), sont délimités en groupes sous forme de signe d'une surface d'au moins 0,2 mm$^2$.

9. Document selon la revendication 8, caractérisé en ce que le signe représente une image, un pictogramme, un paraphe, un caractère ou des parties de telles représentations, et en ce qu'un ou plusieurs signes sont contenus sur le document.

10. Procédé de fabrication d'un document selon l'une des revendications précédentes, caractérisé en ce que le dessin est produit par enlèvement partiel de la couche intermédiaire (4).

11. Procédé de fabrication d'un document selon l'une des revendications 1 à 9, caractérisé en ce que la couche intermédiaire (4) est appliquée sur la couche de support (2) à l'aide d'un masque ou d'un écran de sérigraphie, qui produit le dessin.

12. Procédé de fabrication d'un document selon l'une des revendications 1 à 9, caractérisé en ce que des parties munies des marquages optiques (3) et de la couche intermédiaire (4) sont individuellement disposées sur la couche de support (2), selon le dessin prédéterminé.

13. Procédé selon la revendication 10, caractérisé en ce qu'avant d'appliquer la couche intermédiaire (4), on recouvre d'abord la couche de support (2), sur les parties de surface prévues pour les ponts d'adhésion (5,5',5"), d'une couche (7) pouvant être enlevée par lavage, en ce qu'on applique la couche intermédiaire (4) sur toute la surface de la couche de support (2), et en ce qu'on enlève ensuite la couche intermédiaire (4') et la couche (7), par un processus de lavage, uniquement sur ces parties de surface.

14. Procédé selon la revendication 12, caractérisé en ce que le dessin est produit par des moyens mécaniques.

15. Procédé selon la revendication 10, caractérisé en ce que le dessin est produit par des moyens chimiques.

16. Procédé selon la revendication 13, caractérisé en ce qu'on utilise, comme couche (7) pouvant être enlevée par lavage, un polymère soluble dans l'eau.

**Fig. 1a**

**Fig. 1b**

**Fig. 2**

**Fig. 3a**

**Fig. 3b**

**Fig. 3c**

**Fig. 3d**